# EUROPEAN PATENT APPLICATION

(11) **EP 4 664 877 A1**
(43) Date of publication of application: **17.12.2025**
(21) Application number: 23920824.2
(22) Date of filing: 23.11.2023
(51) Int. Cl.: H04N 9/31, H04N 23/63

(54) **PROJECTION IMAGE CORRECTION METHOD AND APPARATUS, PROJECTION DEVICE, COLLECTION DEVICE, AND MEDIUM**

(30) Priority: 07.02.2023 CN 202310143584
(71) Applicant: Beijing Roborock Innovation Technology Co., Ltd., Beijing 102206 (CN)
(72) Inventor: YANG, Guangzhen, Beijing 102200 (CN); YUAN, Jiabo, Beijing 102200 (CN); CHEN, Jiabo, Beijing 102200 (CN); YU, Yihui, Beijing 102200 (CN)
(74) Representative: Cabinet Beau de Loménie
(86) International application number: PCT/CN2023/133685
(87) International publication number: WO 2024/164633

(57) **Abstract**

Disclosed are a projection image correction method and apparatus, a projection device, a collection device, and a medium. The projection image correction method comprises: projecting to a target reflecting surface to form a test image, and obtaining a template image, wherein the template image is an image generated by collecting the test image when an edge of the test image is located in a preset collection area, the collection area is an area formed between a preset first collection box and a preset second collection box, and the second collection box surrounds the outer side of the first collection box; obtaining a position correction amount of a projection on the target reflecting surface on the basis of a deviation between the template image and a preset standard image; and on the basis of the position correction amount, correcting a target image to be projected by a projection device, to obtain a corrected image projected on the target reflecting surface.

## Description

### CROSS-REFERENCE TO RELATED APPLICATIONS

The present disclosure claims priority to Chinese Patent Application No. 202310143584.7, filed on February 7, 2023, the content of which is incorporated herein by reference in its entirety.

### TECHNICAL FIELD

The present disclosure relates to the field of projection technologies, and relates to a method and apparatus for correcting a projected image, a projection device, a capturing device, and a medium.

### BACKGROUND

A projector can achieve projection onto a specified reflecting surface as a projection surface for a user to view a projected image at different viewing angles based on the principle of diffuse reflection. The reflecting surface may generally be a wall surface or a curtain, and the evenness of the reflecting surface directly affects the image effect that the user views. Especially, for short-throw projectors and ultra-short-throw projectors placed relatively close to the wall surface, the projection angle of the optical engine is small, and thus slight unevenness of the reflecting surface may cause obvious distortion in the projected image. Therefore, how to quickly and accurately correct the distortion of the projected image becomes an urgent problem to be solved.

### SUMMARY

In view of the foregoing problem, some embodiments of the present disclosure provide a method and apparatus for correcting a projected image, a projection device, a capturing device, and a medium, improving the efficiency of correcting a distorted image projected by a projection device.

In a first aspect of the present disclosure, a method for correcting a projected image is provided. The method includes: forming a test image through projection onto a target reflecting surface, to acquire a template image, where the template image is an image generated by capturing the test image when edges of the test image are located within a preset capturing region, the capturing region is a region formed between a preset first capturing frame and a preset second capturing frame, and the second capturing frame surrounds a periphery of the first capturing frame; acquiring, based on a deviation between the template image and a preset standard image, a position correction value for the projection onto the target reflecting surface; and correcting, based on the position correction value, a target image to be projected by the projection device to acquire a corrected image projected onto the target reflecting surface.

In a second aspect of the present disclosure, a projection device is provided. The projection device includes a processor and a memory. The memory is coupled to the processor and stores instructions, and the instructions, when executed by the processor, cause the projection device to perform the steps of the method for correcting a projected image provided in the first aspect of the present disclosure.

In a third aspect of the present disclosure, an apparatus for correcting a projected image is provided. The apparatus includes: a template image acquisition module, configured to form a test image through projection onto a target reflecting surface, to acquire a template image, where the template image is generated by capturing the test image when edges of the test image are located within a preset capturing region, the capturing region is a region formed between a preset first capturing frame and a preset second capturing frame, and the second capturing frame surrounds a periphery of the first capturing frame; a correction value acquisition module, configured to acquire, based on a deviation between the template image and a preset standard image, a position correction value for the projection onto the target reflecting surface; and an image correction module, configured to correct, based on the position correction value, a target image to be projected by a projection device to acquire a corrected image projected onto the target reflecting surface.

In a fourth aspect of the present disclosure, a method for correcting a projected image is provided. The method includes: generating a first capturing frame and a second capturing frame surrounding a periphery of the first capturing frame, where a capturing region is formed between the first capturing frame and the second capturing frame; capturing a test image when edges of the test image are located within the capturing region to acquire a template image, where the test image is an image projected by a projection device onto a target reflecting surface; and sending the template image to the projection device, where a deviation between the template image and a preset standard image is used for determining a position correction value for projection onto the target reflecting surface, and the position correction value is used for correcting a target image to be projected by the projection device to acquire a corrected image projected onto the target reflecting surface.

In a fifth aspect of the present disclosure, a readable storage medium is provided. The readable storage medium includes a computer program stored thereon. The program, when run by a processor, causes the processor to perform the steps of the method for correcting a projected image provided in the first aspect of the present disclosure or the fourth aspect of the present disclosure.

In a sixth aspect of the present disclosure, an image capturing device is provided. The image capturing device includes a processor and a memory. The memory is coupled to the processor and stores instructions, and the instructions, when executed by the processor, cause the image capturing device to perform the steps of the method for correcting a projected image provided in the fourth aspect of the present disclosure.

The above description is only an overview of the technical solutions provided in some embodiments of the present disclosure. To more clearly understand the technical means of the present disclosure to enable implementation in accordance with the content of this specification and to make the above and other features and effects of the present disclosure more obvious and easier to understand, the detailed description of the present disclosure is provided below.

### BRIEF DESCRIPTION OF THE DRAWINGS

For a clearer illustration of the technical solutions in some embodiments of the present disclosure, the drawings required to be used in the description of the embodiments are briefly introduced below. It is apparent that the accompanying drawings in the description below are for some embodiments of the present disclosure, and for those of ordinary skill in the art, other drawings can be acquired according to the accompanying drawings without creative efforts. In the drawings:
FIG. 1 shows a flowchart of a method for correcting a projected image according to some embodiments of the present disclosure;
FIG. 2 shows a schematic diagram of an exemplary visualized capturing region according to some embodiments of the present disclosure;
FIG. 3 shows a schematic diagram of comparison between a Bézier surface and position marking points according to some embodiments of the present disclosure;
FIG. 4 shows a schematic diagram of a topological structure of a target image after dimension reduction according to some embodiments of the present disclosure;
FIG. 5 shows a schematic structural diagram of an apparatus for correcting a projected image according to some embodiments of the present disclosure; and
FIG. 6 shows a flowchart of a method for correcting a projected image according to some other embodiments of the present disclosure.

### DETAILED DESCRIPTION

Exemplary embodiments of the present disclosure will be described in more detail below with reference to the drawings. While exemplary embodiments of the present disclosure are shown in the drawings, it should be understood that the present disclosure may be implemented in various forms and should not be limited by the embodiments set forth herein. Rather, these embodiments are provided such that the present disclosure will be more thoroughly understood and the scope of the present disclosure will be fully conveyed to those skilled in the art.

Due to different application scenarios and limitations of environmental conditions, a target reflecting surface for the projection of a projector generally cannot reach an ideal degree of evenness. Therefore, an image projected by the projector onto the target reflecting surface needs to be corrected. At present, when the image projected onto the target reflecting surface is corrected, an auxiliary photographic device needs to be used to photograph the image projected by the projector onto the target reflecting surface to acquire an actual projected image. Then, distortion detection is performed on the projected image, and compensation is performed, such that the projected image can be corrected. In this way, the projected image presented on the target reflecting surface that a user views can achieve an almost distortion-free effect. However, at present, when the image projected by the projector onto the target reflecting surface is photographed by using the auxiliary photographic device, the photographic device needs to be directly opposite the target reflecting surface, for example, a wall surface, otherwise the photographed projected image may be of poor quality, and distortion correction cannot achieve an ideal effect. Thus, the existing technical solutions severely impact the speed of and accuracy in correction.

Therefore, some embodiments of the present disclosure provide a method for correcting a projected image, and the correction method may be applied to a projection device. It should be noted that the projection device in this specification refers to a device having a projection function, the specific type of which is not limited. In some embodiments of the present disclosure, the projection device may be a projector. According to the method, a test image is formed through projection by the projection device onto a target reflecting surface, and then a template image is acquired. As the template image is generated by photographing the test image when it is detected that the edges of the test image are located within a preset capturing region, it is beneficial for reducing the difficulty of manual capturing when the template image is manually captured, or greatly improving the efficiency of capturing the template image in the case that the template image is captured alternatively through machine identification. Moreover, due to the delimitation of the capturing region, the captured template image is closer to an ideal image acquired by photographing directly opposite the target reflecting surface, and the accuracy in correction is effectively improved. The overall conception of some embodiments of the present disclosure will be described below.

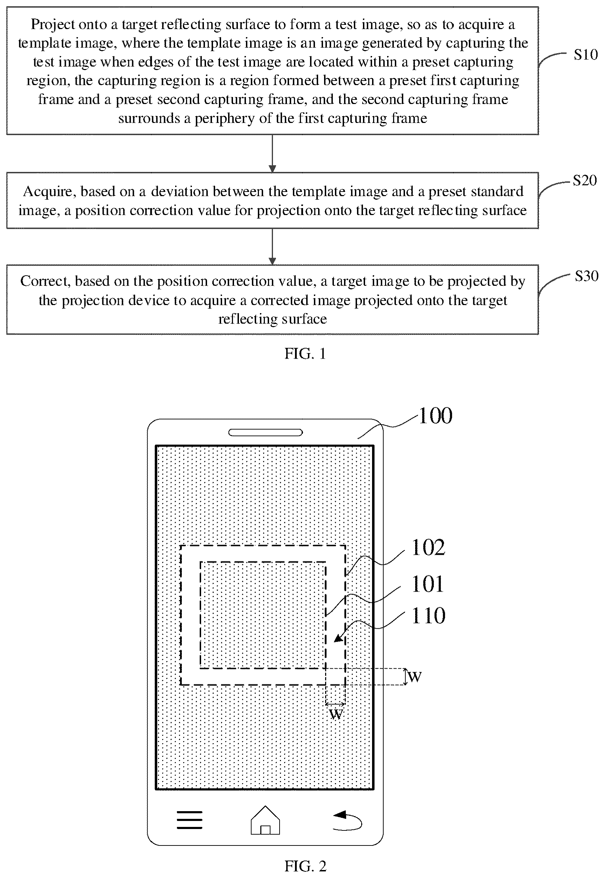

FIG. 1 shows a flowchart of a method for correcting a projected image according to some embodiments of the present disclosure. Referring to FIG. 1, some embodiments of the present disclosure provide a method for correcting a projected image. The method includes:
In step S10, a test image is formed through projection onto a target reflecting surface to acquire a template image, where the template image is an image generated by capturing the test image when the edges of the test image are located within a preset capturing region, the capturing region is a region formed between a preset first capturing frame and a preset second capturing frame, and the second capturing frame surrounds the periphery of the first capturing frame.
In step S20, a position correction value for projection onto the target reflecting surface is acquired based on a deviation between the template image and a preset standard image.
In step S30, a target image to be projected by the projection device is corrected based on the position correction value to acquire a corrected image projected onto the target reflecting surface.

Through steps S10 to S30, the test image is first formed through the projection onto the target reflecting surface, and then the template image is acquired based on the test image. As the template image is an image generated by capturing the test image when it is detected that the edges of the test image are located within the preset capturing region, rapid capturing can be achieved, and the capturing angle can be closer to the target reflecting surface. Then, the position correction value for the projection onto the target reflecting surface is acquired based on the deviation between the template image and the preset standard image. Finally, the target image to be projected by the projection device can be corrected based on the position correction value to acquire the corrected image projected onto the target reflecting surface. In this way, the distortion of the projected image caused by the unevenness of the target reflecting surface can be corrected.

Specific implementations of each step in the embodiment shown in FIG. 1 are separately described in detail below.

As described above, in step S10, the test image is formed through the projection onto the target reflecting surface to acquire the template image, where the template image is an image generated by capturing the test image when the edges of the test image are located within the preset capturing region, the capturing region is a region formed between the preset first capturing frame and the preset second capturing frame, and the second capturing frame surrounds the periphery of the first capturing frame.

In some embodiments, the target reflecting surface in step S10 may be a plane for projection imaging of the projection device. For example, the target reflecting surface may be a wall surface, a curtain, or the floor. The test image may be an image dedicated to picture correction. In some embodiments, the test image may be a checkerboard pattern image, for example, a black and white checkerboard pattern image. In some other embodiments, the test image may alternatively be an image including a specific identifier. In some embodiments, the specific identifier may be a cross or a dot. These identifiers may be distributed in an array on the entire test image, and each identifier may correspond to one position marking point on the test image.

In yet other embodiments, the test image may alternatively be an image formed by superimposing a specific identifier on the picture content projected by the normally operating projection device. In some embodiments, a specific identifier may be superimposed on the picture content projected by the normally operating projection device to form the test image.

In some embodiments, to avoid affecting the normal viewing of the user, an identifier may be superimposed on the picture content projected within a specific time period to form the test image. In some other embodiments, a control instruction input by the user may be further received to determine when to superimpose the identifier on the projected picture content, or when to cancel the superimposition of the identifier on the projected picture content. In this way, the target image projected by the projection device can be corrected more flexibly, and the correction is not limited to a specific time point. In some embodiments, in the case that the target reflecting surface is a reflecting surface provided by a curtain, and the target reflecting surface distorts as the curtain distorts during the projection of the projection device, an identifier may be superimposed on a picture being projected by the projection device to form the test image; then the test image projected onto the target reflecting surface is captured to acquire the template image, such that a target picture can be corrected one or more times at any time, making the image correction more flexible.

It should be noted that the subsequent steps will be described by taking the test image being a black and white checkerboard pattern image as an example. The black and white checkerboard pattern image may be a checkerboard pattern image in which black squares and white squares are arranged alternately, with each square corresponding to four corner points and each corner point corresponding to one position marking point.

In some embodiments, the template image may be captured by a built-in image capturing device of the projection device. In some embodiments, the projection device includes a camera module that can be configured to capture the template image, and the camera module performs imaging detection and generates the first capturing frame and the second capturing frame surrounding the first capturing frame to form the corresponding capturing region; when it is detected that the edges of the test image fall within the capturing region preset by the camera module, the test image currently projected onto the target reflecting surface may be captured to acquire the template image. It can be learned that with the guidance provided by the first capturing frame and the second capturing frame, the relative position and angle between the camera module and the test image can be conveniently and quickly adjusted, such that the template image can be acquired efficiently, and meanwhile, the template image is closer to an image captured directly opposite the target reflecting surface.

In some other embodiments, the template image may alternatively be captured by an independent image capturing device. In some embodiments, a mobile phone or a tablet computer of the user may be used as an image capturing device to capture the template image, and corresponding image capturing software is installed on the image capturing device. FIG. 2 shows a schematic diagram of an exemplary visualized capturing region according to some embodiments of the present disclosure. Referring to FIG. 2, taking the case in which a mobile phone 100 is used to capture a template image as an example, during capturing, a camera module of the mobile phone 100 is enabled, and a first capturing frame 101 and a second capturing frame 102 that are visualized are generated on the display screen of the mobile phone 100. The second capturing frame 102 surrounds the periphery of the first capturing frame 101 to form a visualized capturing region 110 between the two capturing frames. The distance between the first capturing frame 101 and the second capturing frame 102 is the width w of the capturing region 110. When holding an image capturing device for photographing, the user may adjust the position and/or the posture of the image capturing device to enable the edges of a test image projected onto a target reflecting surface fall within the capturing region 110 and then trigger an image capturing action to capture and acquire the template image.

In some embodiments, the user may manually trigger the image capturing action on the image capturing device; alternatively, a built-in program of image capturing software installed on the image capturing device may detect whether the edges of the test image fall within the capturing region 110, and trigger the capturing action when it is detected that the edges of the test image fall within the capturing region 110, which is not limited in this embodiment. In some embodiments, in the case that the edges of the test image does not fall within the capturing region 110, if the user manually triggers the image capturing action, the image capturing device may generate and display prompt information indicating that the capturing fails to remind the user to discard the currently captured template image and re-capture the template image when the edges of the test image are located within the capturing region 100. In this way, it is ensured that the user can quickly and accurately capture the template image at an angle substantially directly opposite the target reflecting surface.

In some embodiments, the size of the capturing region may be set by the user based on the expected accuracy in correction of the target image. In some embodiments, the expected accuracy in correction may be negatively correlated with the width of the capturing region, that is, the higher the expected accuracy in correction is, the smaller the width of the capturing region is. In some embodiments, the expected accuracy in correction may be autonomously selected by the user, for example, may be selected from high accuracy, medium accuracy, and low accuracy, where each level of accuracy adapts to a capturing region with a corresponding width. In some embodiments, a low-accuracy capturing region may be selected in the case that the test image is very obviously distorted; a high-accuracy capturing region may be selected in the case that the test image is almost undistorted. Through the method for capturing the template image by setting capturing regions of different levels of accuracy, multiple corrections can be implemented. Further, the target image may be corrected sequentially from low-accuracy to high-accuracy to avoid the limited effect of one correction; moreover, the problem that it is difficult for the edges of the test image to fall within the capturing region due to the too small width of the capturing region when the template image is captured for the first time can be avoided, helping improve the efficiency of capturing the template image.

In some embodiments, the template image may be an unprocessed image captured by the image capturing device, or may be an image that is captured by the image capturing device and has been preliminarily processed. In some embodiments, the preliminary processing may be capturing the test image projected onto the target reflecting surface to acquire an original image; and then performing grayscale processing, filtering, denoising, and other processing on the original image to acquire the template image. Clearly, in other embodiments, these processing procedures may alternatively be completed at a projection device side, a server side, or the like. An example in which the processing procedures are completed at the projection device side is used below for description.

In some embodiments, after the template image is captured by using the independent image capturing device, the image capturing device may upload the template image to the projection device, that is, the projection device acquires the template image.

As described above, in step S20, the position correction value for the projection onto the target reflecting surface is acquired based on the deviation between the template image and the preset standard image.

In step S20, the standard image is an image formed through the projection of the projection device onto a preset reference plane, and the image may be considered as an undistorted image. Clearly, in actual application, the undistorted standard image is basically an idealized case. Therefore, in practice, an almost undistorted image may be used as the standard image, or an image that is almost undistorted when viewed at least from the viewing angle of the user can be used as the standard image. The projection device may perform projection onto the preset reference plane to acquire an almost undistorted image. The reference plane should be an even plane that is close to an ideal projection surface for the projection device. As the test image and the standard image are projected by using the same projection device, and the distortion is almost caused by the target reflecting surface, the target image projected by the projection device onto the target reflecting surface can be corrected by determining the position correction value based on the deviation between the template image and the standard image.

In some embodiments, step S20 may include the following steps S21 to S23.

In step S21, the template image is identified to acquire N position marking points on the template image, where N is a positive integer.

In some embodiments, in step S21, the N position marking points may be acquired by using a target identification method in machine vision technologies. In some other embodiments, step S21 may include: first, acquiring a first color image from a color channel of the template image and a first luminance image from a luminance channel of the template image to implement the color conversion of the template image; then, performing histogram equalization on both the first color image and the first luminance image to acquire a second color image and a second luminance image; next, superimposing the second color image and the second luminance image to acquire a grayscale image; and finally, acquiring the N position marking points based on the grayscale image. In some embodiments, the color space of the template image may be converted into an HSV color space (where H represents hue, S represents saturation, and V represents value), or a YUV color space (where Y represents luminance, and U and V represent chrominance), and then the first color image is extracted from the color channel, and the first luminance image is extracted from the luminance channel.

Since both the first color image and the first luminance image are histogram-equalized images, the grayscale image acquired through superimposition can have a higher contrast, thereby improving robustness during the subsequent detection of the position marking points. In addition, the capability of processing a template image acquired by capturing a test image in a complex environment can also be improved to ensure the accuracy in identification.

It can be understood that there may be a series of constituent pixel points on square edges and at corner points in the template image. Therefore, to accurately identify the position marking points, it is necessary to find feature points from these constituent pixel points. In some embodiments, the position marking points may be determined by the following methods.

First, convolution filtering is performed on the grayscale image to acquire N point clusters. In some embodiments, convolution processing may be performed on a gray-scale value matrix including gray-scale values of the grayscale image to acquire a target matrix after convolution processing, where the target matrix includes element values corresponding to pixel positions. During convolution processing, a convolution kernel that can highlight square corner points may be used, and in practice, an existing common convolution kernel may be used for implementation, which is not limited in this embodiment. After the target matrix is acquired, a response threshold is dynamically determined, that is, a threshold range may be calculated based on the target matrix.

In some embodiments, the target matrix may be averaged to acquire an average value. In the target matrix, if an element value corresponding to a square corner point is greater than the average value, element values less than the average value may be filtered out; or if an element value corresponding to a square corner point is less than the average value, element values greater than the average value may be filtered out, thereby acquiring the N point clusters. In some other embodiments, as the position of a square corner point in the test image can be obviously different from other positions on the square, the element values in the target matrix may be further clustered to acquire the N point clusters. In this case, each acquired point cluster includes a plurality of element values, and each element value corresponds to one pixel position, that is, the coordinates of a pixel. Then, for each point cluster, a feature point is determined from the point cluster as a position marking point of the point cluster, and the position marking point can most accurately represent a corner point of a square in a checkerboard pattern. In some embodiments, before the position marking point is determined, the extreme point of each point cluster may alternatively be determined through non-maximum suppression as a candidate marking point, which can further filter out an interference point. In some embodiments, the feature point may be an optimal point determined from these candidate marking points by using an optimization method to serve as the position marking point. For example, the optimization method may include gradient descent, Newton's method, and the like, and may be set based on actual needs, which is not limited in this embodiment. The position marking point determined by using the foregoing method can accurately represent a corner point in a checkerboard pattern. Finally, the N position marking points are determined in total.

In some embodiments, the N point clusters may be processed and stored in a preset order to construct a relationship between the coordinate points of each position, so as to ensure that search processing can be performed on each position marking point in an association order during processing, thereby improving the efficiency of calculation processing. In some embodiments, the N point clusters may be processed sequentially based on breadth-first search to acquire the N position marking points, where the N position marking points are stored as a quadtree structure, thereby effectively improving the efficiency of subsequent search processing. After the position marking point is acquired, a position deviation value between the position marking point and a reference marking point may be calculated.

In step S22, a position deviation value between each position marking point and a corresponding reference marking point thereof is acquired, where each position marking point corresponds to one preset reference marking point on the standard image.

In step S22, the reference marking point and the position marking point may be in a one-to-one correspondence. If the test image projected onto the target reflecting surface is not distorted, the position coordinates of the position marking point acquired based on the template image and the position coordinates of the reference marking point corresponding to the position marking point should be the same or substantially the same. Therefore, by calculating the position deviation value between the position marking point and the reference position point corresponding to the position marking point, the target image can be corrected based on the position deviation value. In some embodiments, the target image may be image content stored in the projection device, or may be image content transmitted to the projection device in real time, for example, a stored presentation image, video image, and photo image.

In some embodiments, a reference marking point corresponding to a position marking point (X1, Y1) is denoted as (X0, Y0), and a position deviation value between the two is denoted as (u1, v1), where u1 = X1 - X0, and v1 =Y1-Y0.

In step S23, the position correction value for the projection onto the target reflecting surface is acquired based on N position deviation values.

In step S23, the position correction value is a value for compensation for a pixel position on the target image. In some embodiments, a position correction value for each pixel in the target image may be acquired through linear interpolation on the N position deviation values, such that the target image is corrected based on the position correction value.

In some other embodiments, the N position deviation values may be fitted to acquire a Bézier surface, thereby relatively accurately determining the position correction value for each pixel. The Bézier surface involves control over a continuous and smooth surface through control points, and a position correction value acquired through the method has first-order continuity, such that the correction effect is smoother, and visual discontinuity occurring when a user views a corrected image is avoided.

In some embodiments, the N position marking points may be arranged in A columns, and A is a positive integer. For example, the position marking points may be arranged in a uniform array or a nonuniform array, which is not limited in this embodiment. In this case, the Bézier surface may be divided into a plurality of Bézier curves for fitting, and each column of position marking points may correspond to one Bézier curve. It can be understood that, first, position deviation values of position marking points in each column may be fitted to acquire A Bézier curves; then, the A Bézier curves are fitted to acquire a Bézier surface. The value of each point on the Bézier surface represents a position correction value of a corresponding point on the target image. According to the processing method, the Bézier curves are first acquired through fitting, and then the Bézier surface is acquired through fitting the Bézier curves, which can greatly reduce the complexity of the algorithm while ensuring the accuracy and stability of the algorithm.

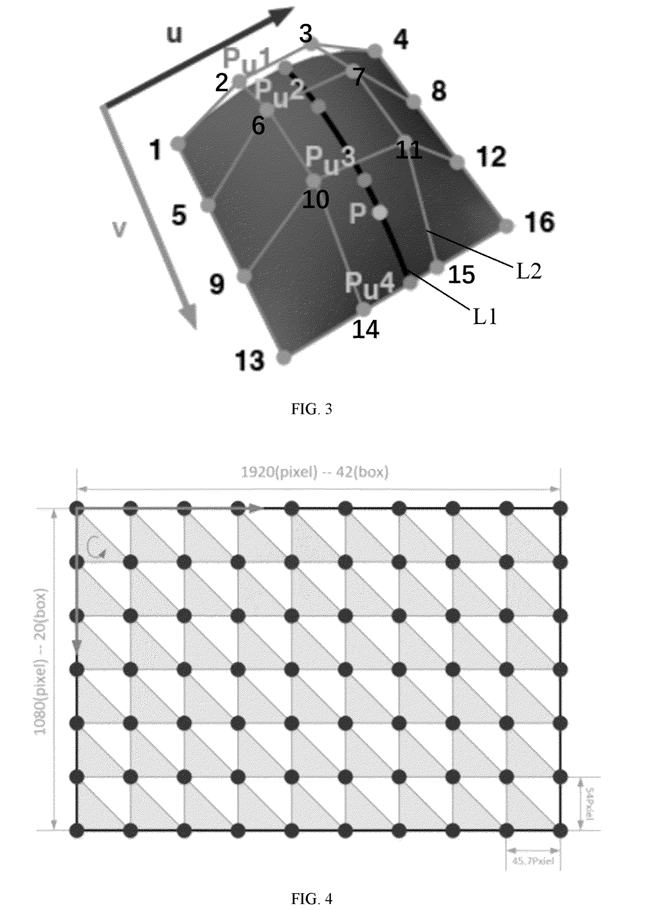

FIG. 3 shows a schematic diagram of comparison between a Bézier surface and position marking points according to some embodiments of the present disclosure. As shown in FIG. 3, as an example, the position marking points are arranged in a 4 × 4 array, where four Bézier curves may be first formed through fitting, and then the four Bézier curves are fitted to form a Bézier surface. Each of points 1 to 16 shown in FIG. 3 is a position marking point, and each of a point Pu1, a point Pu2, a point Pu3, a point Pu4, and a point P is a point on a Bézier curve L1 of the Bézier surface. It can be seen from FIG. 3 that the Bézier surface is smoother than a surface formed by linearly connecting the position marking points. The Bézier curve L1 of the Bézier surface is relatively smooth, while a polyline L2 formed by connecting the position marking points cannot be smooth, and thus the correction effect based on the polyline is not as good as the correction effect based on the Bézier surface. For each pixel position that needs correction in the target image, a corresponding position correction value can be found on the Bézier surface, thereby achieving smooth correction during correction.

As described above, in step S30, the target image to be projected by the projection device is corrected based on the position correction value to acquire the corrected image projected onto the target reflecting surface.

In some embodiments, in step S30, each pixel position may be separately corrected based on the position correction value for each pixel in the target image determined by the Bézier surface. In some embodiments, during correction, each pixel position on the target image may be corrected, or some pixel positions on the target image may be corrected, while other pixel positions are processed through interpolation. This may be set based on actual needs, which is not limited in this embodiment. Finally, the corrected image projected onto the target reflecting surface can be acquired.

In some embodiments, a series of to-be-corrected points may be pre-determined from the target image, and the target image is corrected by correcting these to-be-corrected points, which greatly reduces the complexity and calculation amount of the correction. In some embodiments, step S30 may include the following steps S31 to S33.

In step S31, to-be-corrected points are determined from the target image based on the resolution of the target image.

In some embodiments, in step S31, the to-be-corrected points may be determined uniformly on the target image, and then the to-be-corrected points are compensated and corrected. In some other embodiments, topological dimension reduction may be further performed on the high-resolution target image. That is, topological dimension reduction may be performed on the target image, such that the high-resolution target image is reduced into a topological structure diagram. For the specific process of the dimension reduction, reference may be made to the related technology, which is not described in detail herein.

FIG. 4 shows a schematic diagram of a topological structure of a target image after dimension reduction according to some embodiments of the present disclosure. As shown in FIG. 4, the target image with the resolution of 1920 * 1080 may be processed into a topological structure formed by 42 × 20 × 2 triangles, and the triangles include 42 × 20 vertices. In this case, the distortion correction of the target image may turn into the distortion correction of the triangles, and the distortion correction of the triangles may be implemented by correcting the 40 × 20 triangle vertices.

In step S32, a position correction value corresponding to each to-be-corrected point is determined from the Bézier surface.

In step S33, the target image is corrected based on the position correction value corresponding to the to-be-corrected point to acquire the corrected image.

In steps S32 and S33, since the position coordinates of each to-be-corrected point are known, the value of a corresponding position, that is, a position correction value, can be determined from the Bézier surface. Then, a to-be-corrected point acquired through dimension reduction is compensated. Then, a correction value for a pixel other than the to-be-corrected point may be compensated through interpolation. For example, linear interpolation may be used. In some embodiments, during compensation and correction, the vector sum of a pixel position before correction and the correction value may be used as a pixel position after correction. In the case that missing pixels or overlapping pixels occur during correction, the pixel values at the positions of the missing pixels may be filled in through interpolation, or the pixel values of the overlapping pixels may be processed by averaging, or the overlapping pixels or missing pixels after compensation may be processed by using other applicable methods, which is not limited in this embodiment.

By performing the topological dimension reduction before the compensation and correction on the target image, the calculation amount is effectively reduced, and the efficiency of correcting the target image is improved.

In summary, in the method for correcting a projected image provided in some embodiments of the present disclosure, the test image is first formed through the projection onto the target reflecting surface, and then the template image is acquired based on the test image. As the template image is an image generated by capturing the test image when it is detected that the edges of the test image are located within the preset capturing region, rapid capturing can be achieved, and the capturing angle can be closer to the target reflecting surface, improving the efficiency of the entire correction process. Then, the position correction value for the projection onto the target reflecting surface is acquired based on the deviation between the template image and the preset standard image. Finally, the target image to be projected by the projection device can be corrected based on the position correction value to acquire the corrected image projected onto the target reflecting surface. In this way, the distortion of the projected image that the user views on the target reflecting surface can be corrected.

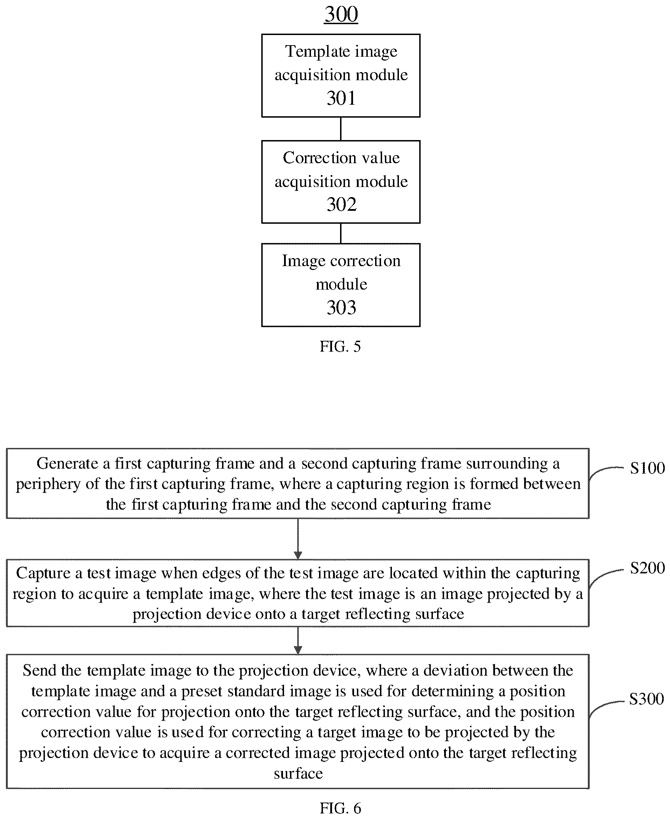

FIG. 5 is a schematic structural diagram of an apparatus for correcting a projected image according to some embodiments of the present disclosure. Referring to FIG. 5, some embodiments of the present disclosure further provide an apparatus 300 for correcting a projected image. The apparatus 300 for correcting a projected image includes: a template image acquisition module 301, a correction value acquisition module 302, and an image correction module 303.

The template image acquisition module 301 is configured to project onto a target reflecting surface to form a test image, so as to acquire a template image, where the template image is an image generated by capturing the test image when the edges of the test image are located within a preset capturing region, the capturing region is a region formed between a preset first capturing frame and a preset second capturing frame, and the second capturing frame surrounds the periphery of the first capturing frame.

The correction value acquisition module 302 is configured to acquire, based on a deviation between the template image and a preset standard image, a position correction value for projection onto the target reflecting surface.

The image correction module 303 is configured to correct, based on the position correction value, a target image to be projected by the projection device to acquire a corrected image projected onto the target reflecting surface.

In some embodiments, the correction value acquisition module 302 is configured to: identify the template image to acquire N position marking points on the template image, where N is a positive integer; acquire a position deviation value between each position marking point and a corresponding reference marking point thereof, where each position marking point corresponds to one preset reference marking point on the standard image; and acquire, based on N position deviation values, the position correction value for the projection onto the target reflecting surface.

In some embodiments, the correction value acquisition module 302 is configured to: acquire a first color image from a color channel of the template image and a first luminance image from a luminance channel of the template image; perform histogram equalization on both the first color image and the first luminance image to acquire a second color image and a second luminance image; superimpose the second color image and the second luminance image to acquire a grayscale image; and acquire the N position marking points based on the grayscale image.

In some embodiments, the correction value acquisition module 302 is configured to: perform convolution filtering on the grayscale image to acquire N point clusters; and determine a corresponding position marking point from each point cluster to determine the N position marking points in total.

In some embodiments, the correction value acquisition module 302 is configured to: process the N point clusters sequentially based on breadth-first search to acquire the N position marking points, where the N position marking points are stored as a quadtree structure.

In some embodiments, the N position marking points are arranged in A columns, and A is a positive integer. The correction value acquisition module 302 is configured to: fit position deviation values of position marking points in each column to acquire A Bézier curves; and fit the A Bézier curves to acquire a Bézier surface, where the value of each point on the Bézier surface represents a position correction value of a corresponding point on the target image.

In some embodiments, the image correction module 303 is configured to: determine to-be-corrected points from the target image based on the resolution of the target image; determine a position correction value corresponding to each to-be-corrected point from the Bézier surface; and correct the target image based on the position correction value corresponding to the to-be-corrected point to acquire the corrected image.

In some embodiments, the test image is a checkerboard pattern image; the standard image is a substantially undistorted checkerboard pattern image formed through projection onto a preset reference plane.

It should be noted that the specific implementation and technical effects of the apparatus 300 for correcting a projected image provided in some embodiments of the present disclosure are the same as those described in the foregoing method embodiments. For a brief description, reference may be made to the corresponding content in the foregoing method embodiments for the content not mentioned in the apparatus embodiments.

FIG. 6 shows a flowchart of a method for correcting a projected image according to some other embodiments of the present disclosure. In some embodiments of the present disclosure, a method for correcting a projected image is further provided. The method may be applied to an image capturing device for capturing a test image. For example, the method may be applied to a mobile terminal having a photographing function, for example, a mobile phone or a tablet computer. The user may use the mobile terminal to capture a test image and generate a template image. Referring to FIG. 6, the method for correcting a projected image may include the following steps.

In step S100, a first capturing frame and a second capturing frame surrounding the periphery of the first capturing frame are generated, where a capturing region is formed between the first capturing frame and the second capturing frame.

In step S200, a test image is captured when the edges of the test image are located within the capturing region to acquire a template image, where the test image is an image projected by a projection device onto a target reflecting surface.

In step S300, the template image is sent to the projection device, where a deviation between the template image and a preset standard image is used for determining a position correction value for projection onto the target reflecting surface, and the position correction value is used for correcting a target image to be projected by the projection device to acquire a corrected image projected onto the target reflecting surface.

It should be noted that for the specific implementation and corresponding beneficial effects of each step of the method for correcting a projected image provided in the embodiment shown in FIG. 6, reference may be made to the foregoing method embodiments, which are not described herein again.

Some embodiments of the present disclosure further provide a projection device, including a processor and a memory. The memory is coupled to the processor and stores instructions, and the instructions, when executed by the processor, cause the projection device to perform the steps of the method for correcting a projected image provided in the method embodiment shown in FIG. 1.

It should be noted that the specific implementation and technical effects of each step of the method for correcting a projected image performed by the projection device provided in some embodiments of the present disclosure are the same as those described in the corresponding method embodiment of FIG. 1. For a brief description, reference may be made to the corresponding content in the foregoing method embodiments for the content not mentioned in this embodiment.

Some embodiments of the present disclosure further provide an image capturing device, including a processor and a memory. The memory is coupled to the processor and stores instructions, and the instructions, when executed by the processor, cause the projection device to perform the steps of the method for correcting a projected image provided in the method embodiment shown in FIG. 6. In some embodiments, the image capturing device may be a device independent of the projection device and having an image photographing function, for example, a mobile terminal with a camera, such as a mobile phone or a tablet computer. In some other embodiments, the image capturing device may alternatively be a built-in camera module of the projection device. This may be set based on actual needs, which is not limited in this embodiment.

It should be noted that the specific implementation and technical effects of each step of the method for correcting a projected image performed by the image capturing device provided in some embodiments of the present disclosure are the same as those described in the corresponding method embodiment of FIG. 6. For a brief description, reference may be made to the corresponding content in the foregoing method embodiments for the content not mentioned in this embodiment.

Some embodiments of the present disclosure further provide a readable storage medium, including a computer program stored thereon. The program, when run by a processor, causes the processor to perform the steps of the method for correcting a projected image provided in any one of the foregoing method embodiments.

It should be noted that according to the readable storage medium provided in some embodiments of the present disclosure, the specific implementation and technical effects of each step when the program is run by the processor are the same as those described in the foregoing method embodiments. For a brief description, reference may be made to the corresponding content in the foregoing method embodiments for the content not mentioned in this embodiment.

According to the method and apparatus for correcting a projected image, the projection device, the image capturing device, and the storage medium provided in some embodiments of the present disclosure, the test image is first formed through the projection onto the target reflecting surface, and then the template image is acquired based on the test image. As the template image is an image generated by capturing the test image when it is detected that the edges of the test image are located within the preset capturing region, rapid capturing can be achieved, and the capturing angle can be closer to the target reflecting surface, improving the efficiency of the entire correction process. Then, the position correction value for the projection onto the target reflecting surface is acquired based on the deviation between the template image and the preset standard image. Finally, the target image to be projected by the projection device can be corrected based on the position correction value to acquire the corrected image projected onto the target reflecting surface. In this way, rapid distortion correction can be achieved.

The term "and/or" as used herein is merely a way to describe an association relationship between associated objects, indicating that three possible relationships may exist. For example, "A and/or B" can represent: the existence of A alone, the simultaneous existence of A and B, and the existence of B alone. In addition, the character "/" herein generally indicates an "or" relationship between the associated objects before and after the "/"; and the word "or" does not exclude the existence of an element or step not listed in the claims. The word "a" or "an" used before an element does not exclude the existence of a plurality of such elements. The present disclosure may be implemented by hardware including several different elements and by a suitably programmed computer. In the claims that enumerate several apparatuses within a described technical unit, several of these apparatuses may be specifically embodied by the same hardware item. The use of the words "first", "second", "third", and the like does not indicate any order. These words can be understood as names.

Those skilled in the art should appreciate that the embodiments of the present disclosure may be provided as a method, a system, or a computer program product. Accordingly, the present disclosure may take the form of an entire hardware embodiment, an entire software embodiment, or an embodiment combining software and hardware aspects. Furthermore, the present disclosure may take the form of a computer program product implemented on one or more computer-available storage media (including, but not limited to, a disk memory, a CD-ROM, an optical memory, and the like) containing computer-available program codes therein.

The present disclosure is described with reference to flowcharts and/or block diagrams of the method, the device (system), and the computer program product according to the embodiments of the present disclosure. It should be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a special-purpose computer, an embedded processor, or processors of other programmable data processing devices to generate a machine, such that an apparatus for achieving functions designated in one or more flows of the flowcharts and/or one or more blocks of the block diagrams is generated based on instructions executed by the computers or the processors of the other programmable data processing devices.

These computer program instructions may also be stored in a computer-readable memory capable of guiding the computers or the other programmable data processing devices to operate in a specific mode, such that a manufactured product including an instruction apparatus is generated based on the instructions stored in the computer-readable memory, and the instruction apparatus achieves the functions designated in one or more flows of the flowcharts and/or one or more blocks of the block diagrams.

These computer program instructions may also be loaded onto the computers or the other programmable data processing devices, such that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

Although the preferred embodiments of the present disclosure have been described, those skilled in the art may make additional changes and modifications to these embodiments once they learn of the basic inventive concepts. Therefore, the attached claims are intended to be interpreted as including the preferred embodiments and all changes and modifications falling within the scope of the present disclosure.

It will be apparent to those skilled in the art that various changes and variations may be made to the present disclosure without departing from the spirit and scope of the present disclosure. Thus, if these changes and variations of the present disclosure are within the scope of the claims of the present disclosure and their equivalents, the present disclosure is also intended to encompass these changes and variations.

## Claims

1. A method for correcting a projected image, comprising:
forming a test image through projection onto a target reflecting surface, to acquire a template image, wherein the template image is an image generated by capturing the test image when edges of the test image are located within a preset capturing region, the capturing region is a region formed between a preset first capturing frame and a preset second capturing frame, and the second capturing frame surrounds a periphery of the first capturing frame;
acquiring, based on a deviation between the template image and a preset standard image, a position correction value for the projection onto the target reflecting surface; and
correcting, based on the position correction value, a target image to be projected by a projection device to acquire a corrected image projected onto the target reflecting surface.

2. The method according to claim 1, wherein acquiring, based on the deviation between the template image and the preset standard image, the position correction value for the projection onto the target reflecting surface comprises:
identifying the template image to acquire N position marking points on the template image, where N is a positive integer;
acquiring a position deviation value between each position marking point and a reference marking point corresponding thereto, wherein each position marking point corresponds to a preset reference marking point on the standard image; and
acquiring, based on N position deviation values, the position correction value for the projection onto the target reflecting surface.

3. The method according to claim 2, wherein identifying the template image to acquire the N position marking points on the template image comprises:
acquiring a first color image from a color channel of the template image and a first luminance image from a luminance channel of the template image;
performing histogram equalization on the first color image and the first luminance image respectively to acquire a second color image and a second luminance image;
superimposing the second color image and the second luminance image to acquire a grayscale image; and
acquiring the N position marking points based on the grayscale image.

4. The method according to claim 3, wherein acquiring the N position marking points based on the grayscale image comprises:
performing convolution filtering on the grayscale image to acquire N point clusters; and
determining the N position marking points in total by determining a corresponding position marking point from each point cluster.

5. The method according to claim 4, wherein determining the N position marking points in total by determining the corresponding position marking point from each point cluster comprises:
processing the N point clusters sequentially based on breadth-first search to acquire the N position marking points, wherein the N position marking points are stored as a quadtree structure.

6. The method according to claim 2, wherein the N position marking points are arranged in A columns, where A is a positive integer; and acquiring, based on the N position deviation values, the position correction value for the projection onto the target reflecting surface comprises:
fitting position deviation values of position marking points in each column to acquire A Bézier curves; and
fitting the A Bézier curves to acquire a Bézier surface, wherein a value of each point on the Bézier surface represents a position correction value of a corresponding point on the target image.

7. The method according to claim 6, wherein correcting, based on the position correction value, the target image to be projected by the projection device to acquire the corrected image projected onto the target reflecting surface comprises:
determining to-be-corrected points from the target image based on resolution of the target image;
determining a position correction value corresponding to each to-be-corrected point from the Bézier surface; and
correcting the target image based on the position correction value corresponding to the to-be-corrected point to acquire the corrected image.

8. The method according to claim **1,** wherein the test image is a checkerboard pattern image; and the standard image is a substantially undistorted checkerboard pattern image formed through projection onto a preset reference plane.

9. A projection device, comprising a processor and a memory, wherein the memory is coupled to the processor and stores instructions, and the instructions, when executed by the processor, cause the projection device to perform steps of the method according to any one of claims 1 to 8.

10. An apparatus for correcting a projected image, comprising:
a template image acquisition module, configured to form a test image through projection onto a target reflecting surface, to acquire a template image, wherein the template image is an image generated by capturing the test image when edges of the test image are located within a preset capturing region, the capturing region is a region formed between a preset first capturing frame and a preset second capturing frame, and the second capturing frame surrounds a periphery of the first capturing frame;
a correction value acquisition module, configured to acquire, based on a deviation between the template image and a preset standard image, a position correction value for the projection onto the target reflecting surface; and
an image correction module, configured to correct, based on the position correction value, a target image to be projected by a projection device to acquire a corrected image projected onto the target reflecting surface.

11. A method for correcting a projected image, comprising:
generating a first capturing frame and a second capturing frame surrounding a periphery of the first capturing frame, wherein a capturing region is formed between the first capturing frame and the second capturing frame;
capturing a test image when edges of the test image are located within the capturing region to acquire a template image, wherein the test image is an image projected by a projection device onto a target reflecting surface; and
sending the template image to the projection device, wherein a deviation between the template image and a preset standard image is used for determining a position correction value for projection onto the target reflecting surface, and the position correction value is used for correcting a target image to be projected by the projection device to acquire a corrected image on the target reflecting surface.

12. A readable storage medium, comprising a computer program stored thereon, which when run by a processor, causes steps of the method according to any one of claims 1 to 8, or 11 to be performed.

13. An image capturing device, comprising a processor and a memory, wherein the memory is coupled to the processor and stores instructions, and when the instructions are executed by the processor, steps of the method according to claim 11 are caused to be performed by the image capturing device.
